# EUROPEAN PATENT SPECIFICATION

(11) **EP 3 545 476 B1**
(45) Date of publication and mention of the grant of the patent: **15.03.2023**
(21) Application number: 17798027.3
(22) Date of filing: 19.10.2017
(51) Int. Cl.: G06Q 10/08

(54) **ROBOTIC GENERATION OF A MARKER DATA MAPPING FOR USE INVENTORYING PROCESSES**
ROBOTERGENERIERUNG EINES MARKIERUNGSDATEN-MAPPINGS ZUR VERWENDUNG IN INVENTARISIERUNGSPROZESSEN
GÉNÉRATION ROBOTISÉE D'UN MAPPAGE DE DONNÉES DE MARQUEURS À UTILISER DANS LES PROCESSUS D'INVENTAIRE

(30) Priority: 23.11.2016 US 201615359945
(43) Date of publication of application: 02.10.2019
(73) Proprietor: Sensormatic Electronics, LLC, Boca Raton, FL 33487 (US)
(72) Inventor: TRIVELPIECE, Steven, Edward, Rancho Santa Margarita, CA 92688 (US); TRIVEPIECE, Craig, Evan, Mission Viejo, FL 92692 (US)
(74) Representative: Hafner & Kohl PartmbB
(86) International application number: PCT/US2017/057329
(87) International publication number: WO 2018/097910

(56) References cited:
- EP-A2- 1 953 694
- WO-A1-2015/026862
- US-A1- 2009 140 926
- US-A1- 2014 058 556
- US-A1- 2016 119 540
- US-B1- 9 472 075

## Description

### FIELD OF THE INVENTION

This document relates generally to inventory systems. More particularly, this document relates to systems and methods for the robotic generation of a marker data mapping (or location reference data) for use in inventorying processes.

### BACKGROUND OF THE INVENTION

Various methods are known for inventorying items in a facility. One method employs various technologies for counting the items in the facility as well as determining the items' locations within the facility. The various technologies include Radio Frequency Identifier ("RFID") technology and Bluetooth technology.

RFID technology has conventionally been used in the identification and tracking of products, equipment, and even people. For example, RFID systems are commonly used in Electronic Article Surveillance ("EAS") and in logistical and inventory systems for monitoring goods and equipment and recording information on the target item. An RFID system typically includes an RFID reader and an RFID device such as a tag or label. The RFID reader may transmit a Radio-Frequency ("RF") carrier signal to the RFID device. The RFID device may respond to the RF carrier signal (or interrogator signal) with a data response signal (or authentication reply signal) encoded with information stored on the RFID device. RFID devices may store information such as a unique identifier or an Electronic Product Code ("EPC") associated with an article or item.

The RFID technology allows retailers to rapidly and/or continuously identify products, count products and track product locations. As such, the RFID technology offers significant benefits over a physical inventory counting process. By leveraging the RFID technology to increase inventory accuracy, retailers are better able to perform replenishment, service customer requests, manage product recalls or any other activities that rely on inventory data. With this level of inventory visibility, retailers must also take on the additional burden of being able to locate specific products easily and quickly so that they can service the above-listed use cases. Products on the market today to aid in determining a product's location are either too expensive or not accurate enough to serve this need.

Indoor proximity systems are well known in the art. One conventional indoor proximity system is known as iBeacon^{®}. iBeacon^{®} employs Bluetooth communication technology to connect to mobile communication devices (e.g., cellular phones). Upon establishment of such connection, the iBeacon^{®} requests and receives first information from each Mobile Communication Device ("MCD"). The first information includes information which has been agreed upon by the cell user for provision to the iBeacon^{®}. The iBeacon^{®} can also push second information to the MCD. The Bluetooth communication technology is based on a 2.45 GHz transmission, and its data rate ranges from 1 Mbit to 24 Mbit.

In the above described conventional inventorying systems, RFID) tags and/or iBeacons^{®} are used for creating markers and location information within the facilities. Often RFID tags, iBeacons^{®} and other types of markers are manually placed on various movable and fixed structures to help equipment automatically identify either information about the equipment and/or its location within the facility. One of the difficulties of such systems is the necessity and cost to create a mapping of all of the markers that can be used to determine the locations of products, equipment, and even people within a facility during an inventorying process. The mapping needs to be updated every time a piece of equipment is moved to a new location within the facility, old equipment is reconfigured or reprogrammed, and/or new equipment is added to the system. The mapping is manually created via costly and error-prone human activities (including human-software interactions).

WO 2015/026862 A1 discloses a method for distributing micro-location-based notifications to a computing device.

US 9 472 075 B1 discloses systems and methods for determining a location of an object within a facility.

US 2009/140926 A1 discloses a beacon-based localization system that utilizes a mobile object with dynamically deployable beacons for guiding the mobile object.

### SUMMARY OF THE INVENTION

The inventions is defined by the appended Claims. The present document concerns systems and methods for creating and/or maintaining a data mapping to be used in a subsequent inventorying process to locate objects within an area. The methods involve: identifying, by a robot, at least one first marker disposed within the area which should be re-programed; transforming, by the robot, a first programmed state of the at least one first marker to a second programmed state; and creating, by the robot, the data mapping specifying a current physical location of the at least one first marker which was re-programed and current physical locations of second markers also disposed within the area. The operations performed by the robot may be autonomous operations. Each of the first and second markers comprises a barcode, a locator tag, a beacon or a camera.

In some scenarios, the robot also detects when a piece of display equipment has been re-located within the area. The first marker is identified by the robot in response to such a detection. The robot may further: identify at least one location in the area at which at least one third marker should be disposed; perform operations to dispose the at least one third marker at the identified location; and modify the data mapping to specify a current physical location of the third marker. The location can be identified in response to: the robot's detection of a piece of display equipment which has recently been added to the area; and/or the robot's determination that an additional marker should be disposed within the area in order for a current objective of an inventorying system to be met during the subsequent inventorying process.

In those or other scenarios, the robot determines a battery status of a marker of the first and second markers. The robot performs actions to autonomously replace the marker or a battery of the marker when the battery status indicates that the marker or battery should be replaced. Additionally or alternatively, the robot performs operations to adjust a beam emitted from a marker of the first and second markers so that a coverage area of the marker matches a camera's FOV. The camera may be disposed on the robot. The beam can be adjusted by modifying the power levels of the marker.

### DESCRIPTION OF THE DRAWINGS

Embodiments will be described with reference to the following drawing figures, in which like numerals represent like items throughout the figures.
FIG. 1 is an illustration of an exemplary architecture for an inventorying system.
FIG. 2 is an illustration of an exemplary architecture for a robot.
FIG. 3 is an illustration of an exemplary architecture for a server.
FIG. 4 provides a flow diagram of an exemplary method for creating a marker mapping.
FIG. 5A-5B (collectively referred to as "FIG. 5") provide a flow diagram of an exemplary method for determining locations of RFID tags in an area of interest.

### DETAILED DESCRIPTION OF THE INVENTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

The present solution generally concerns systems and methods for providing an improved inventorying system. The improvement is achieved by use of a robot that generates reference data for use during an inventorying process to determine the location of items within a given area of interest (e.g., a building or an area within or outside of the building). The reference data comprises a map or mapping of the locations of markers distributed throughout the given area of interest. The markers include, but are not limited to, barcodes, locator tags, iBeacons^{®} and/or cameras. The robot generates the map or mapping by: (a) autonomously placing markers of various types within the given area of interest, (b) autonomously configuring or reconfiguring the markers; and (c) storing first information indicating the locations of the markers in the given area of interest. The first information can be stored in any format selected in accordance with a particular application. For example, the first information can be stored in a table format. The first information is used to generate a multidimensional map showing the respective locations of the markers within the given area of interest.

Prior to describing the present robotic solution, an exemplary inventorying system is described to assist the reader in understanding how the map or mapping can be used as reference data during an inventorying process. Notably, the robot of the present solution can also be used to perform the inventorying process. The cost of this robotic inventorying process is relatively low and can be performed at any time relatively quickly. By adding a highly directional RFID antenna onto the robot, it is possible to locate very accurately where the items are located in the area of interest. The RFID antenna can include, but is not limited to, a Yagi antenna or a beam steered metamaterials antenna. Both of these antennas are well known in the art, and therefore will not be described herein. Any known or to be known Yagi antenna or metamaterials antenna can be used herein without limitation.

### Exemplary Inventorying System

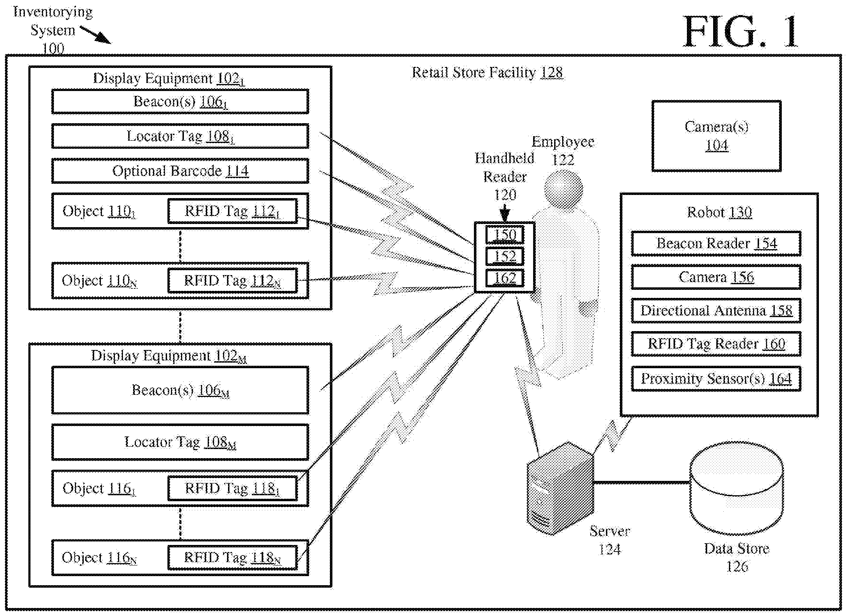

Referring now to FIG. 1, there is provided a schematic illustration of an exemplary inventorying system **100** that is useful for understanding the present solution. The present solution is described herein in relation to a retail store environment. The present solution is not limited in this regard, and can be used in other environments. For example, the present solution can be used in distribution centers, factories and other commercial environments. Notably, the present solution can be employed in any environment in which objects and/or items need to be located and/or tracked.

The inventorying system **100** is generally configured to allow improved object and/or item locating within a facility using various types of communication and sensor technologies. As shown in FIG. 1, inventorying system **100** comprises a Retail Store Facility ("RSF") **128** in which display equipment **102₁,** ..., **102_{M}** is disposed. The display equipment is provided for displaying objects (or items) **110₁-110_{N}, 116₁-116_{N}** to customers of the retail store. The display equipment can include, but is not limited to, shelves, article display cabinets, promotional displays, fixtures and/or equipment securing areas of the RSF **128.** The RSF can also include emergency equipment (not shown), checkout counters and an EAS system (not shown). Emergency equipment, checkout counters, and EAS systems are well known in the art, and therefore will not be described herein.

Cameras **104** are located at strategic locations within the RSF **128.** The placement of the cameras within the RSF **128** is autonomously performed by a robot **130** during a pre-inventorying process. The robot **130** and the pre-inventorying process will be described in detail below. In some scenarios, the cameras **104** are disposed on walls, ceilings and/or display equipment **102₁,** ..., **102_{M}.** The cameras **104** are configured to capture images and/or videos of scenes within their Field Of Views ("FOVs"). The term "Field Of View" or "FOV", as used herein, refers to the extent of the observable world that is captured at an given moment by a camera. Each FOV has a value less than or equal to one hundred eighty degrees (180°). The cameras are provided to assist in identifying items located within the RSF **128** and/or the item locations within the RSF **128.** In this regard, the cameras employ algorithms to determine what some of the items are on the display equipment **102₁,** ..., **102_{M}.** For example, the cameras are able to identify objects in images captured thereby and determine characteristics of those objects (e.g., color, size, shape, etc.). These characteristics are then compared against a database of object-related data to determine if match or a similarity exits therebetween. If a match or similarity exits, then the object unique identifier associated with the matching or similar stored object- related data is allocated to the image. However, the cameras are unable to show what is under stacks of items and behind other items. Accordingly, the present solution combines the benefits of the cameras and other technologies to improve the accuracy of the inventorying system. This other technology includes, but is not limited to, beacon technology, locator tag technology and/or barcode technology.

In this regard, beacons **106₁,** ..., **106_{M}** are also located at strategic locations within the RSF **128.** In some scenarios, the beacons are disposed on display equipment **102₁,** ..., **102_{M},** as shown in FIG. 1. Additionally or alternatively, the beacons are disposed on emergency equipment, checkout counters, walls, ceilings, and/or EAS system equipment (e.g., pedestals near and entrance/exit of the RSF), Beacons are well known in the art, and therefore will not be described herein. Still, it should be understood that the beacons are generally configured to facilitate a periodic or continuous determination of locations of the objects within the RSF **128,** The beacons are not communicatively coupled to a network.

The beacons **106₁,** ..., **106_{M}** rely on highly directional signal s (such as optical signals) in order to illuminate a well-defined zone (e.g., a shelf). Accordingly, the beacons can include, but are not limited to, infrared beacons, ultrasonic beacons, and RF beacons. The RF beacons can employ an 802.1 1 protocol, an 802. 15.4 protocol or Bluetooth technology.

The beacons **106₁,** ..., **106_{M}** are positioned so that beams are emitted toward locations where items are stored (e.g., shelves). For example, the beacons may be mounted overhead emitting downward to limit operator body shielding and avoid blocking obstacles. In some scenarios, the beacons would not emit vertically but with certain angles. The coverage of a beacon is the field in which the beacon receiver is able to receive and decode the beacon signals. This field is called the "Zone-Of-Interest" or "ZOI". The locations of the ZOIs are known. Each ZOI is identified by the location Identifier ("ID") transmitted from a respective beacon. The beacons can be arranged so that their ZOIs do or do not overlap. Overlapping ZOIs provide a means to compensate shadowing from an operator body or obstacles.

Each ZOI contains the items to be inventoried and located. The size of the ZOI depends on the location accuracy. In some exemplary cases, the ZOI is less than a one (1) meter radius. The RSF **128** has a plurality of ZOIs. A single ZOI could encompass a single shelf, rack or table. The present invention is not limited to the particulars of this example.

The cameras **104** are positioned and/or configured so that they cover the same or similar ZOI as the beacons **106₁,** ..., **106_{M}.** As noted above, each camera has a FOV. The FOV is modified (i.e., decreased) to only cover a ZOI. Similarly, a beam emitted from a beacon is adjusted to match or substantially match the camera's FOV. The adjustment of the camera's FOV and/or the beacon's beam is autonomously performed by a robot **130** during a pre-inventorying process and/or an inventorying process. Exemplary pre-inventorying and inventorying processes will be described in detail below.

The cameras can see stacks of products. The cameras can look at color, size and other characteristics to determine that the entire stack of objects is a single Stock Keeping Unit ("SKU") or different sizes of the same SKU. However, since the camera has a limited ability to see the RFID tags coupled to the objects, the inventorying system **100** can rely on RFID tag reads to determine if there are multiple SKUs in the same stack of objects. The RFID tag reads can also be used to determine and/or verify the locations of the objects. By combining data from RFID tag reads and the camera images, the total accuracy of the inventorying process is increased by a significant percentage.

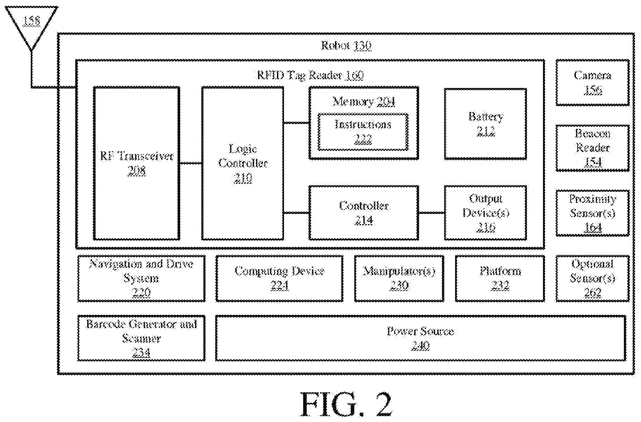

By correlating RFID tag reads and the location ID received from a beacon, it is possible to determine and/or verify the location of objects **110₁,** ..., **110_{N}, 116₁,** ..., **116_{N}** within the RSF **128.** In this regard, it should be understood that information (e.g., a map or data mapping) is stored in a data store (e.g., data store **126**) that specifies the known locations of the beacons in three dimensional ("3D") space. This information can be stored in the data store using the robot **130** and a server **124.** Robot **130** and server **124** will be described in more detail below in relation to FIG. 2.

The beacons **106₁,** ..., **106_{M}** are designed to be inexpensive, light, small, autonomous, easy to mount, long lasting and energy efficient. In this regard, the beacons may comprise an energy harvesting circuit. The energy harvesting circuit can include, but is not limited to, a solar cell array, a rechargeable battery, a super capacitor and/or a voltage converter.

At least one beacon reader **150, 154** is provided for communicating with the beacons **106₁,** ..., **106_{M}.** In this regard, each beacon reader **150, 154** comprises a receiver designed to receive beacon signals from the beacons when placed with the ZOIs, respectively. A first beacon reader **150** may be provided as an accessory to a handheld reader **120,** or alternatively worn by an operator **122** of the handheld reader **120** to optimize reception and to avoid the obstruction of beacon signals by the operator's body. The shoulders, head or arms of the operator are relatively good placements to receive highly directional signals from the beacons **106₁,** ..., **106_{M}.** A second beacon reader **154** may be provided with the robot **130.**

Each beacon reader **150, 154** may use broad and/or multiple sensors pointing at different directions to maximize reception and compensate the operator's or robot's movement and motion. The beacon reader **150, 154** could use the fusion of inertial sensors (e.g., a gyroscope, an accelerometer and/or a magnetometer) to identify the spatial position of the beacon receiver, and therefore the direction of the inertial sensor. In some scenarios, only location IDs received from the sensor pointing up is used. In this case, the inertial sensors are used to determine which sensor is pointing up and therefore which sensor to listen.

Notably, locator tags **108₁,** ..., **108_{M}** may be employed in addition to or as an alternative to the beacons **106₁,** ..., **106_{M}.** Each locator tag has a unique ID associated therewith. When the handheld reader **120** and/or robot **130** reads a locator tag, it obtains the unique ID. Information is stored in database **126** which specifies the known locations of the locator tags. Accordingly, RFID tags **112₁,** ..., **112_{N}** read in time proximity with a locator tag can be assigned to the approximate same location (e.g., a particular shelf, table or other piece of display equipment).

As noted above, the handheld reader **120** and/or robot **130** is(are) generally configured to read RFID tags **112₁,** ..., **112_{N}, 118₁,** ..., **118_{N}** and the locator tags **108₁,** ..., **108_{M}.** The RFID tags **112₁-112_{N}, 118₁-118_{N}** are respectively coupled to the objects **110₁-110_{N}, 116₁-116_{N}.** The RFID and locator tags are described herein as comprising single-technology tags that are only RFID enabled. The present invention is not limited in this regard. The RFID and locator tags can alternatively or additionally comprise dual- technology tags that have both EAS and RFID capabilities.

In some scenarios, the handheld reader **120** and/or robot **130** operate(s) in a static configuration. The power and other RFID parameters are set before reading tags to inventorying the same. The whole inventory of tags is performed with the configuration set at the start of the inventorying process.

In other scenarios, the handheld reader **120** and/or robot **130** operate(s) in a dynamic configuration. The handheld reader **120** and/or robot **130** dynamically adapt(s) the RFID parameters based on whether or not it is present within a ZOI. When the handheld reader **120** or robot **130** is not present within a ZOI, it operates in a default mode, i.e., using a maximum power and reading RFID tags only once to ensure inventory accuracy in a timely manner. When the handheld reader **120** or robot **130** is within a ZOI, it operates in a location mode, i.e., it toggles between reads at high power and reads at low power. The power used to read an RFID tag is inversely proportional to a tag location confidence factor. That is, the lower the power used to read an RFID tag, the higher the tag location confidence. High power reads ensure inventory accuracy, while low power reads allow location accuracy. In location mode, an RFID tag can be read multiple times to allow the correlation logic to reallocate an RFID tag from one location to another. The power can be dynamically adjusted depending on the RFID tag density being read. As inventory accuracy has to be maintained, the power applied in location mode can be reduced in case of dense tag population, and vice versa.

During operation of inventorying system **100,** RFID tag location is performed by allocating a ZOI to each RFID tag. The ZOI is identified by the location ID received from a beacon when the RFID tags are being read by the handheld reader **120.** As the beacon position is known and associated with a unique location ID, the physical location of the RFID tag is deduced and located as being within the ZOI of the beacon.

Notably, the location ID is not constantly received while the beacon receiver is in the ZOI. Accordingly, the mode of the handheld reader or robot is maintained for a certain period of time ("latch time") and renewed each time a location ID is received. The latch time does not exceed a few seconds as the operator or robot can physically move from one ZOI to another ZOI within a few seconds. For each location ID received, a time window is defined in which occurred tag reads are associated with the location.

In some scenarios, two or more ZOIs overlap or RFID tags may be read from an adjacent ZOI, which causes cross-reads to occur, A cross-read is a tag read from a first ZOI to a second ZOI. Cross-reads cause location conflicts and may reduce location accuracy. In order to resolve location conflicts, a location confidence is computed for each location ID and for each tag involved. The location confidence is computed based on the number of reads, an average Received Signal Strength Indicator ("RSSI"), a max RSSI and the power level of the RFID tag reader **152, 160** at the time of a tag read. The tag location is deducted from the location ID having the highest location confidence value. An RFID tag can be declared between multiple locations if there is no clear winner based on the location confidences.

In other scenarios, simple logic is employed to determine tag locations. For example, the handheld reader or robot records a time window centered on a timestamp of each location ID received. Then for each RFID tag, the timestamp of the read having the highest RSSI is used to retrieve the associated location ID if it is included in a recorded time window. The location is deduced from the location ID.

In some scenarios, one or more locator tags **108₁,** ..., **108_{M}** are placed within each beacon's ZOI for improving location accuracy by providing additional location data. The placement of the locator tags can be performed autonomously by the robot **130.** In some scenarios, a locator tag is placed on each side of a table or shelf. Alternatively or additionally, a locator tag is placed on each shelf of multi-shelf display equipment. A locator tag can include, but is not limited to, an RFID tag mounted on a wall, ceiling, ground or equipment for which a location is known. The locator tag is oriented to be easily read.

An RFID tag **112₁,** ..., **112_{N}** may be used as a locator tag if its determined location is considered as having a high degree of confidence. In this scenario, the locator tag reads adjust the location confidence for each RFID tag read in close time proximity. Tag reads around the same time as a locator tag have a higher probability to be in the same ZOI as the locator tag. The locator tag reads are also used to provide approximate positions within the ZOI reducing the location granularity. The locator tag reads also help to approximate the height of the surrounding RFID tags enabling 3D mapping.

The tag location in regards to locator tags is performed when both tags have been read at a relatively lower power (short range). Since the usage of low power reduces the inventory accuracy and/or slows down the process, it should be performed only when necessary. The handheld reader **120** or robot **130** will operate in default mode most of the time (i.e., read using a relatively high power), and operate in location mode only when close to objects (i.e., read using a relatively low power). The location mode is triggered when a locator tag is read along a relatively high RSSI. The location mode is maintained for a certain period of time. The time period is renewed when a reader trigger event reoccurs. A low power read on a locator tag is also an event renewing the location mode period.

The location mode can also be triggered by detecting the proximity of items or obstacles. In this case, the handheld reader and/or robot is equipped with a proximity sensor **162, 164** (e.g., an acoustic sensor or infrared sensor). The proximity sensor **162, 164** detects the distance from the handheld reader or robot to the RFID tags being read. A distance threshold value can be applied to trigger the location mode. The distance can be used to adjust the read power of the handheld reader or robot. The distance can be used to compute more precise tag locations.

The tag locations are achieved by considering tag reads in close time proximity with a locator tag read as approximately in the same location. The lower the read power used, the higher the tag location confidence. The location confidence is computed based on the number of reads, an average RSSI, a maximum RSSI and the RFID tag readers' s power level used to read the RFID tags. An RFID tag's location is deduced from the locator tag position having clearly the higher location confidence value. An RFID tag can be declared between multiple locations if there is no clear winner based on the location confidences.

Alternatively, a different logic is employed that consists of receding a time window centered on the timestamp of each locator tag read. All those time windows chronologically aligned create a timeline of the RFID tag reader's location as each time window corresponds to a tag locator for which its location is known.

For each RFID tag, the read having the highest RSSI is selected and the timestamp of this read is used with the timeline. If the timestamp is included in a recorded time window of the timeline, the location is deduced from the location of the corresponding locator tag.

When two time windows overlap, the one created from the read having the highest RSSI takes over the overlapping time period. The applied time window widths can be adjusted based on the RSSI locator tag reads. The higher the RSSI, the wider the time window and vice versa. As a result, a tag locator read having higher RSSI takes priority while a tag locator read occurring at lower RSSI would have their time window reduced or filtered.

The ZOI coverage and locator tag positions have to be known to enable tag location. This mapping can be done by taking physical measurements by the handheld reader **120** or robot **130.** Additionally or alternatively, a fingerprint technique is employed. In some scenarios, the handheld reader **120** or robot **130** records received location IDs while pinpointing its position on a map. By doing so, the ZOIs are mapped to physical locations and maintained in a database. The same process can be applied to locator tags. The handheld reader **120** or robot **130** scans a locator tag while pinpointing its location on the map. The scanning can be done by: reading a two dimensional barcode printed on a locator tag; and/or RFID reads at very close range to the locator tag.

The field emitted by a beacon **106₁,** ..., **106_{M}** could be shaped by the handheld reader **120** or robot **130** in order to guarantee that its emitting signals cover the corresponding ZOI. Beacons may contain a control system allowing the beacon recader **150, 154** to remotely change the beacon beam width and range. The beacon reader **150, 154** would provide a feedback to the handheld reader **120** or robot **130** indicating the receiving of location IDs. Using the feedback and the beam width/power remote control, the handheld reader **120** or robot **130** can adjust the beacon to confine the field to the corresponding ZOI. This operation may be performed once during installation or at other times. As the beams are highly directional, the beacon reader **150, 154** would only receive signals from the beacon pointing to its location whatever its position in space.

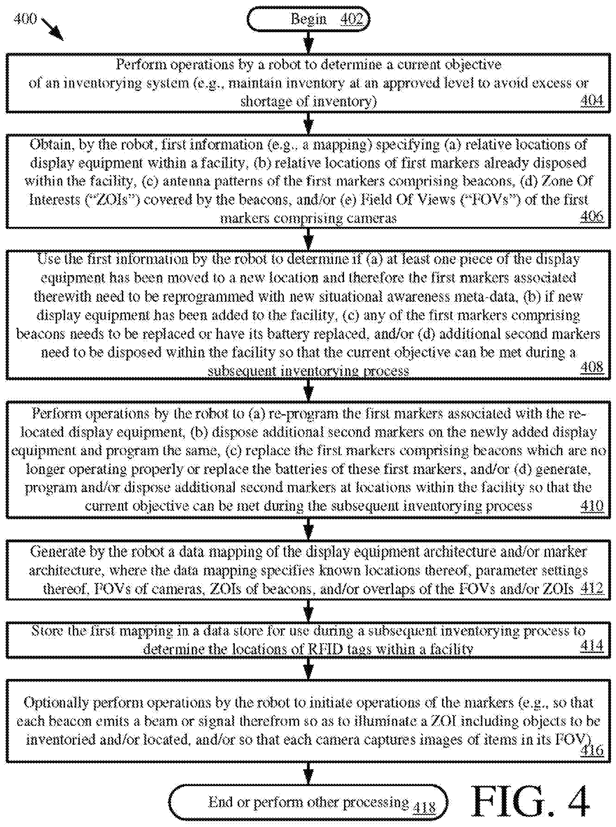

A more complex implementation could use multiple beacons emitting in multiple directions from various placements (e.g., ceilings, wails, furniture, etc.). The beacon reader **150, 154** receives multiple unique location IDs from multiple beacons at a time. Knowing the coverage of each beacon, a geometric computation is performed to deduce the beacon receiver's position in space. The position can also be retrieved from a database previously populated by a site survey (beacons fingerprint) (which can be performed by robot **130** as described below in relation to FIGS. 2 and 4). The combination of location IDs is the key to access the location entry of the database. Knowing the beacon receiver's position in space, the location mode of the handheld reader **120** or robot **130** could be applied if detected nearby item storage. The item locations are deduced from the position of the handheld reader or robot at the time reads occurred. Additionally, a beacon receiver equipped with directional sensors pointing in various directions can deduce its approximate position in space (roll, pitch and yaw) and location as it would receive specific location IDs from specific sensors at specific positions. A sampling of those position and location combinations can be stored in a database using the fingerprint method and retrieved later.

Handheld readers are well known in the art, and therefore will not be described herein in detail. Any known or to be known handheld reader can be used herein without limitation.

Referring now to FIG. 2, there is provided a detailed block diagram of an exemplary architecture for a robot **130.** Robot **130** may include more or less components that that shown in FIG. 2. However, the components shown are sufficient to disclose an illustrative embodiment implementing the present solution. Some or all of the components of the robot **130** can be implemented in hardware, software and/or a combination of hardware and software. The hardware includes, but is not limited to, one or more electronic circuits. The electronic circuit may comprise passive components (e.g., capacitors and resistors) and active components (e.g., processors) arranged and/or programmed to implement the methods disclosed herein.

The hardware architecture of FIG. 2 represents an exemplary architecture of a representative robot **130** configured to facilitate improved object locating within an RSF (e.g., RSF **128** of FIG. 1). In this regard, the robot **130** comprises an RFID tag reader **160** for allowing data to be exchanged with an external device (e.g., locator tags **108₁,** ..., **108_{M},** and/or RFID tags **112₁,** ..., **112_{N}, 118₁,** ..., **118_{N}** of FIG. 1) via RF technology. The components **204-216** shown in FIG. 2 may be collectively referred to herein as the RFID tag reader **160,** and include a power source **212** (e.g., a battery).

The RFID tag reader **160** comprises an antenna **158** for allowing data to be exchanged with the external device via RF technology (e.g., RFID technology or other RF based technology). The external device may comprise locator tags **108₁,** ..., **108_{M}** and/or RFID tags **112₁,** ..., **112_{N}, 118₁,** ..., **118_{N}** of FIG. 1. In this case, the antenna **158** is configured to transmit RF carrier signals (e.g., interrogation signals) to the listed external devices, and/or transmit data response signals (e.g., authentication reply signals) generated by the RFID tag reader **160.** In this regard, the RFID tag reader **160** comprises an RF transceiver **208.** RF transceivers are well known in the art, and therefore will not be described herein. However, it should be understood that the RF transceiver **208** receives RF signals including information from the transmitting device, and forwards the same to a logic controller **210** for extracting the information therefrom.

The extracted information can be used to determine the location of the robot **130** within a facility (e.g., RSF **128** of FIG. 1). Accordingly, the logic controller **210** can store the extracted information in memory **204,** and execute algorithms using the extracted information. For example, the logic controller **210** can: correlate RFID tag reads with beacon reads to determine the location of the RFID tags within the facility; correlated RFID tag reads with locator tag reads to determine the location of the RFID tags within the facility; and/or correlate item information received via RFID tag reads with item information obtained via camera images (e.g., item color, size, shape, etc.) to verify inventorying accuracy.

By combining data from RFID tag reads and the camera images, the total accuracy of the inventorying process is significantly increased. By placing both of the RFID tag reader **160** and a camera **156** on the robot **130,** the inventorying process can be performed at a relatively low cost in an automated manner. The robot **130** has knowledge of where it is in 3D space which can be added to the algorithm to increase the accuracy of the inventorying process.

In some scenarios, the robot **130** receives a planogram (e.g., from server **124** of FIG. 1) indicating the placement of objects on display equipment. Planograms are well known in the art, and therefore will not be described in detail herein. Generally, a planogram includes a layout of a venue that provides a diagram or model indicating the placement of objects on shelves. The planogram can have detailed information about products. The detailed information includes, but is not limited to, product characteristics, labels, digital images, and/or videos of the products in the venue.

The robot **130** collects information about the display equipment and the objects located on the display equipment. This information can be collected by reading barcodes, RFID tags and/or beacons associated with the display equipment and/or objects. In some scenarios, the robot **130** compares the size of the display equipment to the size of the object(s) detected as being located thereon. Results of this comparison are used by the robot **130** to (a) determine if the display equipment includes more rows on which undetected (or hidden) objects reside and/or (b) determine how many objects should be disposed on the display equipment. This information can be used to identify a possible inaccuracy in the inventorying process. The robot **130** can then take remedial measures to address the possible inaccuracy. The remedial measures can include, but are not limited to, performing another RFID tag read (a) from a different position relative to the display equipment and/or (b) subsequent to the movement of blocking objects via the robot's manipulator **130** (e.g., an articulating arm). Robotic manipulators are well known in the art, and therefore will not be described herein. Any known or to be known manipulator can be used herein without limitation.

In some scenarios, the RFID tag reader **160** is disposed on a fixed chassis of the robot 130. Alternatively, the RFID tag reader **160** is disposed at the end of an extendable mechanical structure of the robot (not shown in FIG. 2). The extendable mechanical structure can include, but is not limited to, an articulating arm or a plurality of sliding concentric tubular parts. In this case, the robot **130** can move the RFID tag reader **160** into an optimal position (e.g., inside display equipment) for obtaining a more accurate RFID tag read (e.g., by reading hidden RFID tags).

By adding a highly directional antenna **158** to the robot **130,** the robot is able to more accurately determine what RFID tags being read correlate to what is shown in the camera images. The highly directional antenna **158** can include a metamaterial antenna with configurable coverage parameters (e.g., beam pattern). The robot can adjust the antenna's coverage parameters so that the ZOI covered by the RFID tag reader **160** is the same as or substantially similar to the FOV of the camera **156.** The RFID tag reader's ZOI and the camera's FOV can be dynamically adjusted by the robot **130** at any time.

Notably, memory **204** may be a volatile memory and/or a non-volatile memory . For example, the memory **204** can include, but is not limited to, a Random Access Memory ("RAM"), a Dynamic Random Access Memory ("DRAM"), a Static Random Access Memory ("SRAM"), a Read-Only Memory ("ROM") and a flash memory. The memory **204** may also comprise unsecure memory and/or secure memory. The phrase "unsecure memory", as used herein, refers to memory configured to store data in a plain text form. The phrase "secure memory", as used herein, refers to memory configured to store data in an encrypted form and/or memory having or being disposed in a secure or tamper-proof enclosure.

Instructions **222** are stored in memory for execution by the RFID tag reader **160** and that cause the RFID tag reader **160** to perform any one or more of the methodologies of the present disclosure. The instructions **222** are generally operative to facilitate determinations as to where RFID tags are located within a facility. Other functions of the RFID tag reader **160** will become apparent as the discussion progresses.

The robot **130** may also comprise a beacon reader **154.** The beacon reader **154** is generally configured to: receive a command signal from the computing device **224** to obtain unique IDs from beacons; send signals to the beacons (e.g., beacons **106₁,** ..., **106_{M}** of FIG. 1) requesting that unique IDs be transmitted therefrom; receiving signals transmitted from the beacons; parsing unique IDs from the received signals; and communicating the unique IDs to the computing device **224.**

The beacon reader **154** may also be used to program or re-program the beacons. For example, if the equipment to which the beacons are coupled has been relocated within a facility, then the robot **130** may write data to the beacons that is useful for determining the beacons new locations within the facility. The robot **130** may additionally or alternatively: modify the power levels, coverage areas and/or ZOIs of the beacons; and/or modify the map or mapping of the markers in accordance with the beacons new locations. The coverage areas of the beacons may be adjusted to match FOVs of cameras located in proximity thereto, and vice versa.

The robot **130** may further comprise at least one proximity sensor **164** (e.g., an acoustic sensor or infrared sensor) and/or other sensor **262.** The proximity sensor **164** detects the distance from the robot **130** to the RFID tags being read (e.g., RFID tags **112₁,** ..., **112_{N}, 118₁,** .. ., **118_{N}** of FIG, 1). A distance threshold value can be applied to trigger the location mode. The distance can be used to adjust the read power of the robot **130.** The distance can be used to compute more precise tag locations during an inventorying process.

The proximity sensor **164** may also be used during a pre-inventorying process. For example, in some scenarios, the proximity sensor **164** detects the distance from the robot **130** to the markers (e.g., beacons and/or locator tags) being read. A distance threshold value can be applied to trigger the location mode. The distance can be used to adjust the read power of the robot **130.** The distance can be used to compute more precise marker locations during a pre-inventorying process. In those or other scenarios, the proximity sensor **164** can be used to detect the robot's **130** distance from markers already placed at strategic locations within the facility. This distance information can be used by the robot to determine where to place new markers in the surrounding area. The more precise marker locations can then be stored in a data store in association with a mapping of the markers. As described herein, the mapping is used in an inventorying process to determine the locations of RFID tags attached to objects.

As shown in FIG. 2, the robot **130** also includes a computing device **224.** The computing device **224** is generally configured to control operations of the robot **130.** These operations include, but are not limited to, autonomous operations to (a) strategically place markers within the area of interest, (b) program or re-program markers with situational metadata, (c) generate a map or mapping of the strategically placed markers, and/or (d) determine the locations of objects within the area of interest using the map or mapping. The programming or re-programming can include One Time Programmable ("OTP") settings, identifiers and credentials in a secure manner for security and integrity of the system.

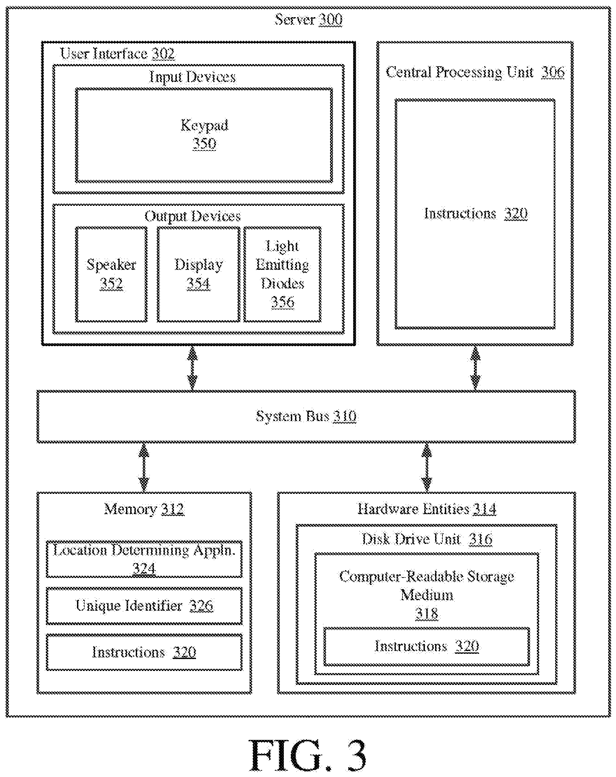

The computing device **224** can include a desktop computer, a personal computer or any other device capable of processing and storing data. An exemplary architecture of a server is provided in FIG. 3. Computing device **224** may be the same as or substantially similar to the server shown in FIG. 3. As such, the discussion provided below in relation to FIG. 3 is sufficient for understanding the computing device **224** of the robot **130.**

The robot **130** also includes a platform **232.** The platform **232** is adapted to hold, contain and/or otherwise support markers and/or other items. In some scenarios, the platform **232** comprises a deck or a bed with a single support surface or multiple support surfaces separated by dividers (e.g., bins, shelves or drawers). The markers and/or other items can be placed on or removed from the platform **232** via the manipulators) **230.** The manipulator(s) 230 are also used to place the markers and/or other items at strategic locations within an area of interest. In this regard, the manipulator(s) **230** are generally configured to grasp or otherwise hold the markers and/or other items.

In some scenarios, the markers include barcodes. The barcodes may be generated by the barcode generator **234** of the robot **130** during a pre-inventorying process. The generated barcodes are disposed at strategic locations within an area of interest using the manipulator(s) **230.** The barcodes can be read by the barcode scanner **234** of the robot **130** and the barcode scanner of the handheld reader **120** of FIG. 1. The barcodes allow the handheld reader **120** of FIG. 1, robot **130** and/or other devices to determine where it(they) is(are) in a facility without having to connect to a backend system.

The robot **130** further includes a navigation and drive system **220.** The navigation and drive system **220** is generally configured to move the robot **130** within a surrounding environment without coming in contact with obstructions and without tipping over. In this regard, the drive system **220** includes, but is not limited to, a propulsion system, a drive train, drive wheels, and/or tracks (such as those found on tanks). The navigation system is configured to continuously determine and track the robot's position and location relative to other objects within the facility. Navigation and drive systems are well known in the art, and therefore will not be described in detail herein. Any known or to be known navigation and drive system can be used herein without limitation. In some scenarios, RFID tags are used by the navigation system to track the robot's location within a facility. Additionally or alternatively, the navigation system uses other techniques (e.g., triangulation) to track the robot's location within a facility.

The various components **154-164, 220-262** of the robot **130** are powered by a power source **240.** The power source can include, but is not limited to, a rechargeable battery and/or an energy harvesting circuit (e.g., photovoltaic cells and/or a super capacitor).

Notably, the robot **130** is configured to monitor battery statuses of external devices, such as beacons **106₁,** ..., **106_{M}** of FIG. 1. When the robot **130** detects a drained battery, it can recharge the battery, replace the battery and/or replace the external device. As noted above, the beacons are not networked. As such, the robot **130** communicatively connects with the beacons directly for purposes of monitoring the battery statuses thereof. Also, the drained battery may be recharged by direct connection or induction via the robot **130.**

In view of the forgoing, the robot **130** is configured to scan for beacons, validate beacon positions, and measure the beacon's battery strength. The robot **130** is also configured to adjust beacon power levels to create just enough coverage area without extending too far. The robot **130** is further able to map out overlaps of beacon coverage areas. The map is useful for determining positions of RFID tags within an area of interest- using multiple beacons. The robot 130 is able to detect replaced beacons that were missing and update a mapping with the new beacon information. In general, the robot is configured to automatically validate, correct and maintain marker deployment. Consequently, the robot optimizes ZOIs, system performance and/or adjusts marker parameters in accordance with a given objective (as described below in relation to an exemplary method of FIG. 4).

The robot **130** is not limited to the architecture shown in FIG. 2. The robot may include more or less components as that shown in FIG. 2. For example, the robot **130** can include Light Detection And Ranging ("LIDAR") devices for further facilitating the generation of accurate relative distance and direction information. LIDAR devices are well known in the art, and therefore will not be described herein. Any known or to be known LIDAR device can be used herein without limitation.

Referring now to FIG. 3, there is provided a detailed block diagram of an exemplary architecture for a server **300.** Server **124** of FIG. 1 is the same as or substantially similar to server 300. As such, the following discussion of server **300** is sufficient for understanding server **124.**

Notably, the server **300** may include more or less components than those shown in FIG. 3. However, the components shown are sufficient to disclose an illustrative embodiment implementing the present solution. The hardware architecture of FIG. 3 represents one embodiment of a representative server configured to facilitate the provision of a map or mapping of display equipment and/or marker locations within an RSF (e.g., RSF **128** of FIG. 1); and/or a three dimensional map showing locations of RFID tags (e.g., RFID tags **112₁,** ..., **112_{N}, 118₁,** .. ., **118_{N}** of FIG. 1) within an RSF (e.g., RSF **128** of FIG. 1). As such, the server **300** of FIG. 3 implements at least a portion of a method for providing such data mapping and/or tag locations in accordance with the present solution. Some or all the components of the server **300** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 3, the server **300** comprises a user interface **302,** a Central Processing Unit ("CPU") **306,** a system bus **310,** a memory **312** connected to and accessible by other portions of server **300** through system bus **310,** and hardware entities **314** connected to system bus **310.** The user interface can include input devices (e.g., a keypad **350**) and output devices (e.g., speaker **352,** a display **354,** and/or light emitting diodes **356**), which facilitate user-software interactions for controlling operations of the server **300.**

At least some of the hardware entities **314** perform actions involving access to and use of memory **312,** which can be a Random Access Memory ("RAM"), a disk driver and/or a Compact Disc Read Only Memory ("CD-ROM"). Hardware entities **314** can include a disk drive unit **316** comprising a computer-readable storage medium **318** on which is stored one or more sets of instructions **320** (e.g., software code) configured to implement one or more of the methodologies, procedures, or functions described herein. The instructions **320** can also reside, completely or at least partially, within the memory **312** and/or within the CPU **306** during execution thereof by the server **300.** The memory **312** and the CPU **306** also can constitute machine-readable media. The term "machine-readable media", as used here, refers to a single medium or multiple media (e.g., a centralized or distributed database, and/or associated caches and servers) that store the one or more sets of instructions **320.** The term "machine-readable media", as used here, also refers to any medium that is capable of storing, encoding or carrying a set of instructions **320** for execution by the server **300** and that cause the server **300** to perform any one or more of the methodologies of the present disclosure.

In some scenarios, the hardware entities **314** include an electronic circuit (e.g., a processor) programmed for facilitating the provision of a data mapping and/or a three dimensional map showing locations of RFID tags, display equipment and/or markers within a facility. In this regard, it should be understood that the electronic circuit can access and run a location determining application **324** installed on the server **300.** The software application **324** is generally operative to facilitate: the determination of display equipment locations, marker locations and/or RFID tag locations within a facility; and the mapping of the di splay equipment locations, marker locations and/or RFID tag locations in a virtual three dimensional space. Other functions of the software application **324** will become apparent as the discussion progresses.

### Exemplary Methods For Creating A Marker Mapping

A robot (e.g., robot **130** of FIGS. 1-2) with various sensors (e.g., RFID tag reader **160,** beacon reader **154,** barcode scanner **234,** sensors **164, 262,** and/or camera **156** of FIG. 2) can be used to automatically and/or autonomously move about an area creating a data mapping and correlation of all the markers, positions, and images of associated physical items. This robot is faster, more accurate and cost effective enough to be regularly deployed whenever a change is made to or is to be made to the layout of the marker infrastructure and/or display equipment infrastructure. The robot can create and maintain a logical structure of markers and a physical data mapping as well. The robot can store close up and long range snapshots of each location to present visual guidance to users trying to find the location while walking.

Robots using LIDAR can also create accurate relative distance and direction information from each marker. One of the advantages of this is that an effective map and navigation system can be created that is based upon relative and relational measurements and not necessarily absolute location (such as Global Positioning System ("GPS")). Other technologies (e.g., compass, inertial reference and distance traveled (measured by wheels) can help build relative positioning mappings and relate these to absolute positions on wall and doors.

Generally, the robot of the present solution is configured to autonomously and/or automatically create and continually update a data mapping (database) of markers and images in large buildings that can be leveraged by applications to determine position, assist in navigation, provide visual verification and provide meta-data about locations. An exemplary method for achieving this is shown in FIG. 4.

Referring now to FIG. 4, there is provided a flow diagram of an exemplary method **400** for creating a data mapping of display equipment locations and/or marker locations using a robot (e.g., robot 130 of FIGS. 1-2), Method **400** can be performed by the robot at pre-selected times, upon the expiration of a time period, periodically, continuously, and/or in response to trigger events. The trigger events can include, but are not limited to: the robot's reception of a command from an external device (e.g., server **124** of FIG. 1); the robot's detection of new equipment in a facility; the robot's knowledge of a new mission objective of an inventorying process; and/or the robot's knowledge of a desired change to a current marker architecture and/or configuration. Notably, the robot has the requisite hardware and/or software for autonomously performing all or a portion of method **400.**

Method **400** begins with **402** and continues with **404.** In **404,** the robot performs operations to determine a current objective of an inventorying system (e.g., inventorying system **100** of FIG. 1). The current objective can be obtained from a data store internal to the robot (e.g., a memory of computing device **224** of FIG. 2) or external to the robot (e.g., data store **126** of FIG. 1). In some scenarios, the objective is to maintain inventory at an approved level to avoid excess or shortage of inventory.

Next in **406,** the robot performs operations to obtain first information. This first information may include, but is not limited to, a data mapping (e.g., cross related tables populated with select data). The first information can be obtained from a data store internal to the robot (e.g., a memory of computing device **224** of FIG. 2) or external to the robot (e.g., data store **126** of FIG. 1). The first information specifies: (a) relative locations of display equipment (e.g., display equipment **102₁,** ..., **102_{M}** of FIG. 1) within a facility (e.g. RSF **128** of FIG. 1); (b) relative locations of first markers (e.g., beacons **106₁,** ..., **106_{M},** locator tags **108₁,** ..., **108_{M},** barcode **114,** and/or camera(s) **104** of FIG. 1) already disposed within the facility, (c) antenna patterns of the first markers comprising the beacons; (d) ZOIs covered by the beacons; and/or (e) FOVs of the first markers comprising cameras.

The first information may be used by the robot in **408** to make one or more determinations. For example, the robot determines if: (a) at least one piece of the display equipment (e.g., display equipment **102₁** of FIG. 1) has been moved to a new location and therefore the first markers associated therewith (e.g., beacon **106₁,** locator tag **108₁** and/or barcode 114 of FIG. 1) need to be reprogrammed with new location meta-data; (b) new display equipment has been added to the facility; (c) any of the first markers comprising beacons needs to be replaced or have its battery replaced; and/or (d) additional second markers need to be disposed within the facility so that the current objective can be met during a subsequent inventorying process.

The robot can make the determinations of **408** by: navigating through the facility, using sensors (e.g., sensors **164** and/or **262** of FIG. 2) to detect display equipment as the robot travels through the facility, using readers/scanners/sensors (e.g., RFID tag reader **160,** beacon reader **154,** barcode scanner **234,** and/or sensors **164, 262** of FIG. 2) to obtain information specifying unique identifiers, types, sizes, shapes and/or locations of display equipment and/or markers disposed within the facility; and/or communicating with the beacons and/or cameras to obtain battery status or other operational status information therefrom. The results of these operations are then compared to the first information to identify differences therebetween. For example, the comparison operations are performed to determine: differences in display equipment location(s) specified by the first information and that detected by the robot as it navigated through the facility; differences in the total number of display equipment pieces identified by the first information and that detected by the robot as it navigated through the facility; differences in the number of markers specified by the first information and the number of markers detected by the robot as it navigated through the facility; and/or whether the first information specifies a marker, FOV and/or ZOI arrangement that is optimized for the current objective determined in **404** and/or for the detected display equipment architecture.

In **410,** the robot may perform operations to re-program the first markers associated with the re-located display equipment. If the first marker is a beacon, then the beacon is re-programed to include new situational meta-data (e.g., a ZOI identifier, a display equipment identifier, and/or a shelf identifier) and/or new parameter settings (e.g., a power level setting). The parameter settings can be selected so that the beacon has a desired antenna pattern and/or coverage area (e.g., a footprint of ZOI covered by the beacon is the same as or substantially similar to a footprint of a FOV of a camera in proximity thereto). If the first marker is a locator tag, then the locator tag is re-programed with new situational meta-data (e.g., a ZOI identifier, a display equipment identifier, a shelf identifier, and/or a shelf segment identifier). If the marker is a barcode, then the barcode is replaced with a new barcode (e.g., a pre-generated barcode or a barcode newly generated by the robot).

The robot may also perform operations to dispose additional second markers on the newly added display equipment and program the same. The second markers are selected by the robot based on certain pre-defined criteria. The criteria include, but are not limited to, display equipment types, display equipment characteristics, a display equipment's location relative to that of other display equipment, marker types, marker characteristics, the type of inventory to be stored on the display equipment, the amount of inventory to be stored on the display equipment, desired marker arrangements (e.g., three beacons should always be placed in certain relative locations so that they are no more than ten feet from each other in a triangular configuration and provide a particular overlapping antenna pattern), and/or predefined marker arrangements for given applications (e.g., display equipment of a particular shelving type should have a locator tag on both ends of each shelf as well as in the middle of each shelf). For example, if newly added display equipment includes shelves, then beacons, locator tags and/or barcodes are selected to be disposed at one or more locations on each shelf. Additionally, a camera may be disposed on the ceiling above the display equipment, a wall in proximity to the display equipment or display equipment in proximity to the display equipment at issue. The camera operational parameters may be set so that a footprint of the camera's FOV matches a footprint of a beacon's coverage area.

The robot can further replace: the first markers comprising beacons which are no longer operating properly or replace the batteries of these first markers; and/or generate, program and/or dispose additional second markers at locations within the facility so that the current objective can be met during the subsequent inventorying process. The second markers include, but are not limited to, beacons and locator tags. The beacons are strategically placed around the facility. The beacons can be disposed on ceilings, walls, display equipment (e.g., display equipment **102₁,** ..., **102_{M}** of FIG. 1), emergency equipment, checkout counters and/or EAS system equipment. Each beacon has a known directional emission pattern. The beacons can be arranged such that their antenna patterns do or do not overlap. Additionally or alternatively, the operational parameters of the beacons can be modified so that there beam patterns are adjusted in a desired manner. The locator tags are also strategically placed around the facility. The locator tags can be disposed on display equipment, such as shelving units.

In some scenarios, the markers are not networked via wires and are standalone mobile devices. As such, the robot can quite easily and quickly dispose the same within the facility in an autonomous manner (i.e., without the assistance and/or direction of a human).

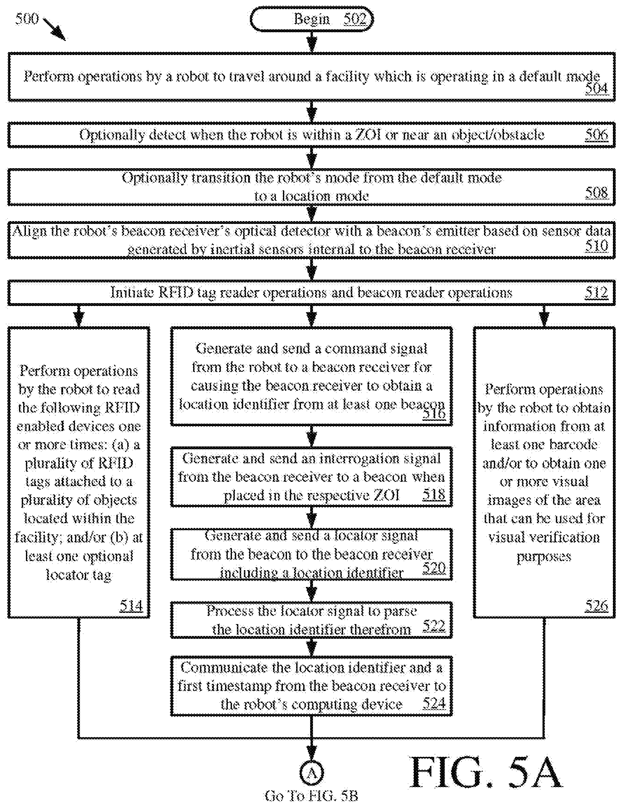

Once the robot completes the operations of **412,** it generates a data mapping of the display equipment architecture and/or marker architecture. The mapping specifies known locations of the display equipment, known locations of markers, parameter settings of the markers, FOVs of cameras, ZOIs of beacons, and/or overlaps of FOVs and/or ZOIs. The data mapping is stored in a data store as shown by **414.** The data mapping may be used during a subsequent inventorying process (such as that discussed below in relation to FIGS. 5A-5B) to facilitate determination of RFID tag locations. The data store may be internal or external to the robot.

In some scenarios, the markers may need to be turned on or enabled. Accordingly, the robot may optionally initiate marker operations in **416.** For example, the robot may initiate marker operations so that: each beacon emits a beam or signal therefrom so as to illuminate a ZOI including objects to be inventoried and/or located; and/or each camera captures images of items in its FOV or a given ZOI continuously, periodically or in response to a command. For example, a beam is emitted from a beacon to illuminate a particular shelving unit or other piece of display equipment (e.g., a table). Upon completing **414** or **416, 418** is performed where method **400** ends or other processing is performed.

In view of the forgoing, the robot is configured to automatically and autonomously create and continually update a data mapping of display equipment, markers and images in buildings that can be leveraged by applications to determine positon, assist in navigation, provide visual verification and provide meta-data about locations. Accordingly, the robot is able to: place generic barcodes, beacons, RF locator tags around an area; map the whole area after the fact; programs beacons and RF locator tags; confirm locations and functioning of markers, and create images at all locations for visual verification and positon of users.

### Exemplary Methods For Locating RF Enabled-Devices In A Facility Using A Robot

Referring now to FIGS. 5A-5B, there is provided a flow diagram of an exemplary method **500** for determining locations of RFID tags in a given area. Method **500** begins with **502** and continues with **504** where a robot (e.g., robot **130** of FIGS. 1-2) performs operations to travel around a facility (e.g., RSF **128** of FIG. 1), At this time, the robot is operating in a default mode, i.e., using a maximum power and reading RFID tags (e.g., RFID tags **112₁,** ..., **112_{N}, 118₁,** ..., **118_{N}** of FIG. 1) only once to ensure inventory accuracy in a timely manner.

In some scenarios, the mode of the robot is automatically changed when a detection is made that the robot is in a beacon's ZOI or near and object/obstacle, as shown by optional **506** and **508.** For example, the robot is transitioned from its default mode to its location mode when a detection is made that the robot is in a beacon's ZOI. In the location mode, the robot toggles between reads at high power and reads at low power to allow location accuracy. In location mode, an RFID tag can be read multiple times to allow the correlation logic to re-allocate an RFID tag from one location to another. The power can be dynamically adjusted depending on the RFID tag density being read. As inventory accuracy has to be maintained, the power applied in location mode can be reduced in case of dense tag population, and vice versa.

A beacon receiver (e.g., beacon reader **154** of FIGS. 1-2) may be provided with the robot. The beacon receiver is provided for communicating with the beacons disposed around the facility while the robot is reading RFID tags. As such, **510** is performed where the beacon receiver's optical detector is aligned with a beacon's emitter based on sensor data generated by inertial sensors (e.g., inertial sensors **262** of FIG. 1) located internal to the robot.

After completing **510, 512** is performed where the robot's RFID tag reader operations and beacon reader operations are initiated. In response to this initiation, method **500** continues with **514, 516-524** and **526,** which are performed concurrently. **514** involves performing operations by the robot to read the following RFID enabled devices one or more times: (a) a plurality of RFID tags attached to a plurality of objects (e.g., objects **110₁,** . . ., **110_{N}, 116₁,** . . ., **116_{N}** of FIG. 1) located within the facility; and/or (b) at least one optional locator tag. **526** involves performing operations by the robot to obtain: information from at least one barcode; and/or at least one visual image of the area that can be used for visual verification purposes. The barcodes can be read using a barcode scanner (e.g., barcode scanner **234** of FIG. 2) of the robot. The visual image can be obtained using the robot' s camera (e.g., camera **156** of FIGS. 1-2) or external cameras (e.g., cameras **104** of FIG. 1).

While **514** and **526** are being performed, **516-524** are performed. These blocks involve: generating and sending a command signal from a computing device (e.g., computing device **224** of FIG. 2) of the robot to a beacon receiver (e.g., beacon reader **154** of FIGS. 1-1) for causing the beacon signal to obtain a location identifier from at least one beacon (e.g., beacons **106₁,** . . ., **106_{M}** of FIG. 1); generating and sending an interrogation signal from the beacon receiver to a beacon when placed in the respective ZOI; generating and sending a locator signal from the beacon to the beacon receiver including a location identifier; processing the locator signal to parse the location identifier therefrom; and communicating the location identifier and a first timestamp from the beacon receiver to the computing device of the robot.

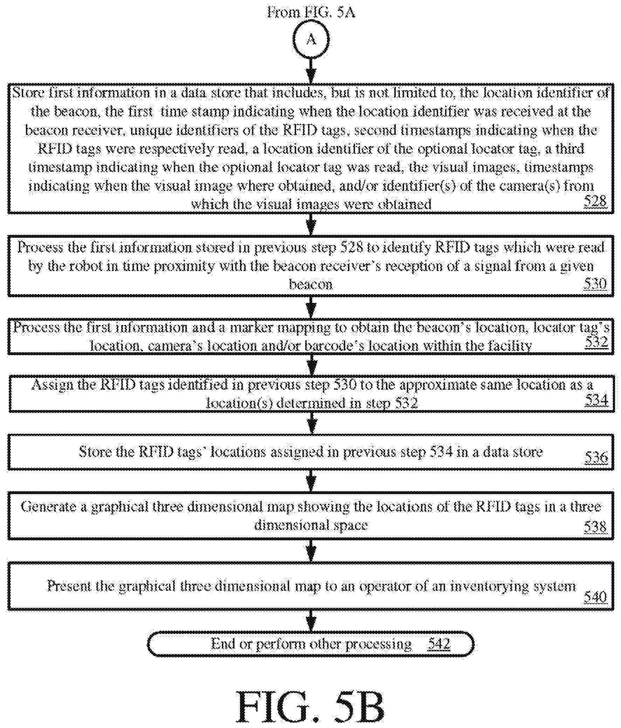

Upon completing **514, 524** and **526,** the method **500** continues with **528** of FIG. 5B. In **528,** first information is stored in the data store. The first information includes the location identifier of the beacon, a first time stamp indicating when the location identifier was received at the beacon receiver, unique identifiers of the RFID tags, second timestamps indicating when the RFID tags were respectively read, a location identifier of the optional locator tag, a third timestamp indicating when the optional locator tag was read, information obtained from scanning at least one barcode, a fourth timestamp indicating when the barcode(s) was(were) scanned, the visual image(s), a fifth timestamp indicating when the visual images where captured or obtained, and/or identifiers associated with the camera(s) from which the visual images were obtained.

The first information is then processed in **530** to identify RFID tags which were read by the robot in time proximity with the beacon receiver's reception of a signal from a given beacon. The first information is also processed by the robot in **532** to obtain the beacon's location, the locator tag's location, the camera's location and/or a barcode's location within the facility. This is achieved using a marker mapping previously generated by the robot. The marker mapping specifies the locations of the markers disposed throughout the facility. The markers include, but are not limited to, the beacons, the locator tags, the cameras and/or barcodes. The marker location can be obtained from the mapping using unique identifiers for the respective markers. The unique identifiers are stored in a datastore (e.g., data store **126** of FIG. 1 and/or a memory of the computing device **224** of FIG. 2) so as to be associated with respective location information.

The RFID tags (identified in previous **530**) are assigned to the approximate same location as the marker location(s) (e.g., a particular shelf of a shelving unit) obtained in previous **532,** as shown by **534.** If two or more different marker locations are obtained in **532,** then the robot performs operations to address this issue. Such operations can involve: selecting one of the different marker locations based on pre-defined criteria, and/or determining a location that resides between the two different marker locations.

The RFID tags' locations are then stored in the data store, as shown by **536.** A graphical three dimensional map is generated in **538** which shows the locations of the RFID tags in a three dimensional space. The location of the robot and/or markers may also be shown in the three dimensional map. The graphical three dimensional map is then presented to an operator (e.g., employee **122** of FIG. 1) of an inventorying system (e.g., inventorying system **100** of FIG. 1), as shown by **540.** The graphical three dimensional map can be presented on a display of a handheld reader (e.g., handheld reader **120** of FIG. 1) and/or other computing device (e.g., server **124** of FIG. 1). Subsequently, **542** is performed where method **500** ends or other processing is performed.

All of the apparatus, methods, and algorithms disclosed and claimed herein can be made and executed without undue experimentation in light of the present disclosure.

## Claims

1. A method for creating a data mapping to be used in a subsequent inventorying process to locate objects (110₁ ... 100_{N}) within an area, comprising:
identifying, by a robot (130), at least one first marker disposed within the area which should be re-programed,
autonomously transforming, by the robot (130), a first programmed state of the at least one first marker to a second programmed state; and
autonomously creating, by the robot (130), the data mapping specifying a current physical location of the at least one first marker which was re-programed and current physical locations of second markers also disposed within the area; wherein
the robot (130) generates reference data for use during an inventorying process to determine the location of items within a given area of interest, wherein the reference data comprises a map or mapping of the locations of markers distributed throughout the given area of interest;
wherein the robot (130) generates the map or mapping by: (a) autonomously placing markers of various types within the given area of interest, (b) autonomously configuring or reconfiguring the markers; and (c) storing first information indicating the locations of the markers in the given area of interest, wherein the first information is used to generate a multidimensional map showing the respective locations of the markers within the given area of interest;
wherein the inventorying process is implemented in an inventorying system comprising a retail store facility, RSF; wherein the robot (130) autonomously places cameras at locations within the RSF during a pre-inventorying process, wherein the cameras are configured to capture images and/or videos of scenes within their field of view, FOV;
wherein beacons are located at locations within the RSF, wherein the beacons are positioned so that beams are emitted toward locations where items are stored, wherein the coverage of a beacon is the zone of interest, ZOI, in which a beacon receiver is able to receive and decode beacon signals, wherein each ZOI contains the objects to be inventoried and located;
wherein the cameras are positioned and/or configured so that they cover the same or similar ZOI as the beacons;
wherein the robot autonomously performs an adjustment of the cameras FOV and/or the beacons beams during a pre-inventorying process and/or an inventorying process, wherein the FOV is adjusted to only cover a ZOI and wherein a beam emitted from a beacon is adjusted to match or substantially match the camera's FOV.

2. The method according to claim 1, further comprising detecting, by the robot (130), when a piece of display equipment (102₁ ... 102_{M}) has been re-located within the area, wherein the at least one first marker is identified by the robot (130) in response to the detecting.

3. The method according to claim 1, further comprising:
identifying, by the robot (130), at least one location in the area at which at least one third marker should be disposed;
performing operations by the robot (130) to dispose the at least one third marker at the identified location; and
modifying the data mapping to specify a current physical location of the third marker.

4. The method according to claim 3, further comprising detecting, by the robot (130), a piece of display equipment (102₁ ... 102_{M}) which has been added to the area, where the at least one first marker or the at least one location is identified in response to the detecting.

5. The method according to claim 3, further comprising determining, by the robot (130), that an additional marker should be disposed within the area in order for a current objective of an inventorying system to be met during the subsequent inventorying process, where the at least one location is identified in response to the determining.

6. The method according to claim 1, further comprising:
determining, by the robot (130), a battery status of a marker of the first and second markers; and
autonomously replacing, by the robot (130), the marker or a battery of the marker when the battery status indicates that the marker or battery should be replaced.

7. The method according to claim 1, further comprising performing operations by the robot (130) to adjust a beam emitted from a marker of the first and second markers so that a coverage area of the marker matches a camera's FOV, wherein the subsequent inventorying process particularly comprises using information obtained from images captured by at least one camera and information obtained from reading at least one Radio Frequency Identifier ("RFID") tag (112₁ ... 112_{M}).

8. The method according to claim 1, further comprising performing operations by the robot (130) to adjust power levels of the first and second markers.

9. A robot (130), comprising;
a processor; and
a computer-readable storage medium comprising programming instructions that are configured to cause the processor to implement a method for creating a data mapping to be used in a subsequent inventorying process to locate objects (110₁ ... 100_{N}) within an area, wherein the programming instructions comprise instructions to:
identify at least one first marker disposed within an area which should be re- programed;
transform a first programmed state of the at least one first marker to a second programmed state;
create a data mapping specifying a current physical location of the at least one first marker which was re-programed and current physical locations of second markers also disposed within the area; and use the data mapping in a subsequent inventorying process to determine locations of objects (110₁ ... 100_{N}) within the area;
generate reference data for use during an inventorying process to determine the location of items within a given area of interest, wherein the reference data comprises a map or mapping of the locations of markers distributed throughout the given area of interest;
wherein the map or mapping is generated by: (a) autonomously placing markers of various types within the given area of interest, (b) autonomously configuring or reconfiguring the markers; and (c) storing first information indicating the locations of the markers in the given area of interest, wherein the first information is used to generate a multidimensional map showing the respective locations of the markers within the given area of interest;
wherein the inventorying process is implemented in an inventorying system comprising a retail store facility, RSF; wherein the robot 8130) is configured to autonomously place cameras at locations within the RSF during a pre-inventorying process, wherein the cameras are configured to capture images and/or videos of scenes within their field of view, FOV;
the robot (130) is configured to locate beacons at locations within the RSF, wherein the beacons are positioned so that beams are emitted toward locations where items are stored, wherein the coverage of a beacon is the zone of interest, ZOI, in which a beacon receiver is able to receive and decode beacon signals, wherein each ZOI contains the objects to be inventoried and located;
wherein the cameras are positioned and/or configured so that they cover the same or similar ZOI as the beacons;
wherein the robot (130) is configured to autonomously perform an adjustment of the cameras FOV and/or the beacons beams during a pre-inventorying process and/or an inventorying process, wherein the FOV is adjusted to only cover a ZOI and wherein a beam emitted from a beacon is adjusted to match or substantially match the camera's FOV.

10. The robot according to claim 9, wherein the programming instructions further comprise instructions to detect when a piece of display equipment (102₁ ... 102_{M}) has been re-located within the area, and wherein the at least one first marker is identified by the robot (130) in response to the detecting.

11. The robot according to claim 9, wherein the programming instructions further comprise instructions to:
identify at least one location in the area at which at least one third marker should be disposed;
cause the robot (130) to perform actions to dispose the at least one third marker at the identified location; and
modify the data mapping to specify a current physical location of the third marker.

12. The robot according to claim 11, wherein the programming instructions further comprise instructions to detect a piece of display equipment (102₁ ... 102_{M}) which has recently been added to the area, and wherein the at least one first marker or the at least one location is identified in response to the detecting.

13. The robot according to claim 11, wherein the programming instructions further comprise instructions to determine that an additional marker should be disposed within the area in order for a current objective of an inventorying system to be met during the subsequent inventorying process, where the at least one location is identified in response to the determining.

14. The robot according to claim 9, wherein the programming instructions further comprise instructions to cause the robot (130) to adjust a beam emitted from a marker of the first and second markers so that a coverage area of the marker matches a camera's FOV; wherein subsequent inventorying process particularly comprises using information obtained from images captured by at least one camera and information obtained from reading at least one Radio Frequency Identifier ("RFID") tag (112₁ ... 112_{M}).

15. The robot according to claim 9, wherein the programming instructions further comprise instructions to cause the robot (130) to adjust power levels of the first and second markers.

## Patentansprüche

1. Verfahren zum Erstellen einer Datenzuordnung, die in einem nachfolgenden Inventarisierungsprozess verwendet werden soll, um Objekte (1101 ... 100N) innerhalb eines Bereichs zu lokalisieren, umfassend:
Identifizieren, durch einen Roboter (130), mindestens einer ersten Markierung, die innerhalb des Bereichs angeordnet ist, der umprogrammiert werden sollte, autonomes Umwandeln eines ersten programmierten Zustands der mindestens einen ersten Markierung durch den Roboter (130) in einen zweiten programmierten Zustand; und
autonomes Erstellen der Datenzuordnung durch den Roboter (130), die einen aktuellen physikalischen Ort der mindestens einen ersten Markierung, die umprogrammiert wurde, und aktuelle physikalische Orte von zweiten Markierungen, die ebenfalls innerhalb des Bereichs angeordnet sind, spezifiziert; wobei
der Roboter (130) Referenzdaten zur Verwendung während eines Bestandsaufnahmeprozesses erzeugt, um den Ort von Gegenständen innerhalb eines gegebenen Interessengebiets zu bestimmen, wobei die Referenzdaten eine Karte oder Kartierung der Orte von Markierungen umfassen, die über den gegebenen interessierenden Bereich verteilt sind;
wobei der Roboter (130) die Karte oder Kartierung durch Folgendes erzeugt: (a) autonomes Platzieren von Markierungen verschiedener Typen innerhalb des bestimmten Interessengebiets, (b) autonomes Konfigurieren oder Neukonfigurieren der Markierungen; und (c) Speichern erster Informationen, die die Orte der Markierungen in dem gegebenen interessierenden Bereich angeben, wobei die ersten Informationen verwendet werden, um eine mehrdimensionale Karte zu erzeugen, die die jeweiligen Orte der Markierungen innerhalb des gegebenen interessierenden Bereichs zeigt;
wobei der Inventarisierungsprozess in einem Inventarisierungssystem implementiert ist, das eine Einzelhandelsgeschäftseinrichtung, RSF, umfasst;
wobei der Roboter (130) während eines Vorinventurprozesses autonom Kameras an Orten innerhalb der RSF platziert, wobei die Kameras dazu konfiguriert sind, Bilder und/oder Videos von Szenen innerhalb ihres Sichtfelds, FOV, aufzunehmen;
wobei sich Beacons an Orten innerhalb der RSF befinden, wobei die Beacons so positioniert sind, dass Strahlen in Richtung von Orten emittiert werden, an denen Gegenstände gelagert werden, wobei die Abdeckung eines Beacons die interessierende Zone, ZOI, ist, in der ein Beacon-Empfänger Beacon-Signale empfangen und dekodieren kann, wobei jede ZOI die zu inventarisierenden und zu lokalisierenden Objekte enthält;
wobei die Kameras positioniert und/oder konfiguriert sind, damit sie dieselbe oder eine ähnliche ZOI wie die Beacons abdecken;
wobei der Roboter während eines Vorinventarisierungsprozesses und/oder eines Inventarisierungsprozesses autonom eine Anpassung des Sichtfelds der Kameras und/oder der Beacon-Strahlen durchführt, wobei das FOV angepasst wird, um nur eine ZOI abzudecken, und wobei ein Strahl, der von einem Beacon emittiert wird, angepasst wird, um mit der FOV der Kamera übereinzustimmen oder im Wesentlichen mit ihm übereinzustimmen.

2. Verfahren nach Anspruch 1, ferner umfassend das Erfassen durch den Roboter (130), wenn ein Anzeigegerät (1021 ... 102M) innerhalb des Bereichs neu positioniert wurde, wobei die mindestens eine erste Markierung durch den Roboter (130) als Reaktion auf das Erfassen identifiziert wird.

3. Verfahren nach Anspruch 1, ferner umfassend:
Identifizieren, durch den Roboter (130), mindestens eines Orts in dem Bereich, an der mindestens eine dritte Markierung angeordnet werden sollte;
Durchführen von Vorgängen durch den Roboter (130), um die mindestens eine dritte Markierung an dem identifizierten Ort anzuordnen; und
Modifizieren der Datenzuordnung, um einen aktuellen physischen Ort der dritten Markierung anzugeben.

4. Verfahren nach Anspruch 3, ferner umfassend das Erfassen, durch den Roboter (130), eines Anzeigegeräts (1021 ... 102M), das dem Bereich hinzugefügt wurde, wobei die mindestens eine erste Markierung oder der mindestens eine Ort als Reaktion auf das Erfassen identifiziert wird.

5. Verfahren nach Anspruch 3, ferner umfassend Bestimmen durch den Roboter (130), dass eine zusätzliche Markierung innerhalb des Bereichs angeordnet werden sollte, damit ein aktuelles Ziel eines Inventarisierungssystems während des nachfolgenden Inventarisierungsprozesses erfüllt wird, wobei der mindestens eine Ort als Reaktion auf das Bestimmen identifiziert wird.

6. Verfahren nach Anspruch 1, ferner umfassend:
Bestimmen, durch den Roboter (130), eines Batteriestatus einer Markierung der ersten und zweiten Markierung; und
autonomes Ersetzen der Markierung oder einer Batterie der Markierung durch den Roboter (130), wenn der Batteriestatus anzeigt, dass die Markierung oder die Batterie ersetzt werden sollten.

7. Verfahren nach Anspruch 1, ferner umfassend das Durchführen von Vorgängen durch den Roboter (130), um einen von einer Markierung der ersten und zweiten Markierung emittierten Strahl einzustellen, so dass ein Abdeckungsbereich der Markierung mit dem FOV einer Kamera übereinstimmt, wobei der anschließende Inventarisierungsprozess insbesondere das Verwenden von Informationen, die aus Bildern erhalten wurden, die von mindestens einer Kamera aufgenommen wurden, und Informationen umfasst, die durch das Lesen mindestens eines Hochfrequenzidentifizierungs-("RFID")-Etiketts (1121 ... 112M) erhalten wurden.

8. Verfahren nach Anspruch 1, ferner umfassend das Durchführen von Operationen durch den Roboter (130), um Leistungspegel der ersten und zweiten Markierungen einzustellen.

9. Roboter (130), umfassend;
einen Prozessor; und
ein computerlesbares Speichermedium, das Programmieranweisungen umfasst, die konfiguriert sind, um den Prozessor zu veranlassen, ein Verfahren zum Erstellen einer Datenzuordnung zu implementieren, die in einem nachfolgenden Inventarisierungsprozess verwendet werden soll, um Objekte (1101 ... 100N) innerhalb eines Bereichs zu lokalisieren,
wobei die Programmieranweisungen Anweisungen umfassen, um:
mindestens eine erste Markierung zu identifizieren, die innerhalb eines Bereichs angeordnet ist, der umprogrammiert werden sollte;
einen ersten programmierten Zustand der mindestens einen ersten Markierung in einen zweiten programmierten Zustand umzuwandeln;
eine Datenzuordnung zu erstellen, die einen aktuellen physikalischen Ort der mindestens einen ersten Markierung, die umprogrammiert wurde, und aktuelle physikalische Orte von zweiten Markierungen, die ebenfalls innerhalb des Bereichs angeordnet sind, angibt; und die Datenzuordnung in einem nachfolgenden Inventarisierungsprozess zu verwenden, um Orte von Objekten (1101 ... 100N) innerhalb des Bereichs zu bestimmen;
Referenzdaten zur Verwendung während eines Inventarisierungsprozesses zu erzeugen, um den Ort von Gegenständen innerhalb eines bestimmten Interessengebiets zu bestimmen, wobei die Referenzdaten eine Karte oder Kartierung der Orte von Markierungen umfassen, die über den gegebenen interessierenden Bereich verteilt sind;
wobei die Karte oder die Kartierung durch Folgendes erzeugt wird: (a) autonomes Platzieren von Markierungen verschiedener Typen innerhalb des bestimmten Interessengebiets, (b) autonomes Konfigurieren oder Neukonfigurieren der Markierungen; und (c) Speichern erster Informationen, die die Orte der Markierungen in dem gegebenen interessierenden Bereich angeben, wobei die ersten Informationen verwendet werden, um eine mehrdimensionale Karte zu erzeugen, die die jeweiligen Orte der Markierungen innerhalb des gegebenen interessierenden Bereichs zeigt;
wobei der Inventarisierungsprozess in einem Inventarisierungssystem implementiert ist, das eine Einzelhandelsgeschäftseinrichtung, RSF, umfasst; wobei der Roboter (130) so konfiguriert ist, dass er Kameras während eines Vorinventarisierungsprozesses autonom an Orten innerhalb der RSF platziert, wobei die Kameras dazu konfiguriert sind, Bilder und/oder Videos von Szenen innerhalb ihres Sichtfelds, FOV, aufzunehmen;
der Roboter (130) dazu konfiguriert ist, Beacons an Orten innerhalb der RSF zu lokalisieren, wobei die Beacons positioniert sind, damit Strahlen in Richtung von Orten emittiert werden, an denen Gegenstände gelagert werden,
wobei die Abdeckung eines Beacons die interessierende Zone, ZOI, ist, in der ein Beacon-Empfänger Beacon-Signale empfangen und dekodieren kann, wobei jede ZOI die zu inventarisierenden und zu lokalisierenden Objekte enthält;
wobei die Kameras so positioniert und/oder konfiguriert sind, dass sie dieselbe oder eine ähnliche ZOI wie die Beacons abdecken;
wobei der Roboter (130) so konfiguriert ist, dass er während eines Vorinventarisierungsprozesses und/oder eines Inventarisierungsprozesses autonom eine Anpassung des Kamera-FOV und/oder der Beacon-Strahlen durchführt, wobei das FOV angepasst wird, um nur eine ZOI abzudecken, und wobei ein Strahl, der von einer Beacon ausgesendet wird, angepasst wird, um mit dem Sichtfeld der Kamera übereinzustimmen oder im Wesentlichen mit ihm übereinzustimmen.

10. Roboter nach Anspruch 9, wobei die Programmieranweisungen ferner Anweisungen umfassen, um zu erfassen, wann ein Anzeigegerät (1021 ... 102M) innerhalb des Bereichs neu positioniert wurde, und wobei die mindestens eine erste Markierung durch den Roboter (130) als Reaktion auf das Erfassen identifiziert wird.

11. Roboter nach Anspruch 9, wobei die Programmieranweisungen ferner Anweisungen umfassen, um:
mindestens einen Ort in dem Bereich zu identifizieren, an dem mindestens eine dritte Markierung angeordnet werden sollte;
den Roboter (130) zu veranlassen, Aktionen durchzuführen, um die mindestens eine dritte Markierung an der identifizierten Stelle anzuordnen; und
die Datenzuordnung zu modifizieren, um einen aktuellen physikalischen Ort der dritten Markierung zu spezifizieren.

12. Roboter nach Anspruch 11, wobei die Programmieranweisungen ferner Anweisungen umfassen, um ein Anzeigegerät (1021 ... 102m) zu erkennen, das kürzlich zu dem Bereich hinzugefügt wurde, und wobei die mindestens eine erste Markierung oder der mindestens eine Ort als Reaktion auf das Erfassen identifiziert wird.

13. Roboter nach Anspruch 11, wobei die Programmieranweisungen ferner Anweisungen umfassen, um zu bestimmen, dass eine zusätzliche Markierung innerhalb des Bereichs angeordnet werden sollte, damit ein aktuelles Ziel eines Inventarisierungssystems während des nachfolgenden Inventarisierungsprozesses erfüllt wird, wobei der mindestens eine Ort als Reaktion auf das Bestimmen identifiziert wird.

14. Roboter nach Anspruch 9, wobei die Programmieranweisungen ferner Anweisungen umfassen, um zu bewirken, dass der Roboter (130) einen von einer Markierung der ersten und zweiten Markierung emittierten Strahl so einstellt, dass ein Abdeckungsbereich der Markierung mit dem FOV einer Kamera übereinstimmt; wobei der nachfolgende Inventarisierungsprozess insbesondere das Verwenden von Informationen umfasst, die aus Bildern erhalten wurden, die von mindestens einer Kamera erfasst wurden, und von Informationen, die durch das Lesen mindestens eines Hochfrequenzidentifizierungs-("RFID")-Etiketts (1121 ... 112M) erhalten wurden.

15. Roboter nach Anspruch 9, wobei die Programmieranweisungen ferner Anweisungen umfassen, um zu bewirken, dass der Roboter (130) Leistungspegel der ersten und zweiten Markierungen anpasst.

## Revendications

1. Procédé de création d'un mappage de données à utiliser dans un processus d'inventaire ultérieur pour localiser des objets (110₁...100_{N}) à l'intérieur d'une zone, comprenant :
l'identification, par un robot (130), d'au moins un premier marqueur disposé à l'intérieur de la zone qui doit être reprogrammé,
la transformation autonome, par le robot (130), d'un premier état programmé de l'au moins un premier marqueur en un second état programmé ; et
la création autonome, par le robot (130), du mappage de données spécifiant un emplacement physique actuel de l'au moins un premier marqueur qui a été reprogrammé et des emplacements physiques actuels de deuxièmes marqueurs également disposés à l'intérieur de la zone ; dans lequel
le robot (130) génère des données de référence à utiliser pendant un processus d'inventaire pour déterminer l'emplacement d'articles à l'intérieur d'une zone d'intérêt donnée, dans lequel les données de référence comprennent une carte ou un mappage des emplacements de marqueurs répartis dans toute la zone d'intérêt donnée ;
dans lequel le robot (130) génère la carte ou le mappage par : (a) le placement autonome de marqueurs de divers types à l'intérieur de la zone d'intérêt donnée, (b) la configuration ou la reconfiguration autonome des marqueurs ; et (c) le stockage de premières informations indiquant les emplacements des marqueurs dans la zone d'intérêt donnée, dans lequel les premières informations sont utilisées pour générer une carte multidimensionnelle montrant les emplacements respectifs des marqueurs à l'intérieur de la zone d'intérêt donnée ;
dans lequel le processus d'inventaire est mis en oeuvre dans un système d'inventaire comprenant une installation de vente au détail, RSF ; dans lequel le robot (130) place de manière autonome des caméras au niveau d'emplacements à l'intérieur de la RSF pendant un processus de pré-inventaire, dans lequel les caméras sont conçues pour capturer des images et/ou des vidéos de scènes à l'intérieur de leur champ de vision, FOV ;
dans lequel des balises sont localisées au niveau d'emplacements à l'intérieur de la RSF, dans lequel les balises sont positionnées de sorte que des faisceaux sont émis vers des emplacements où des articles sont stockés, dans lequel la couverture d'une balise est la zone d'intérêt, ZOI, dans laquelle un récepteur de balise est capable de recevoir et de décoder des signaux de balise, dans lequel chaque ZOI contient les objets à inventorier et à localiser ;
dans lequel les caméras sont positionnées et/ou conçues de sorte qu'elles couvrent la même ZOI ou une ZOI semblable aux balises ;
dans lequel le robot effectue de manière autonome un réglage du FOV des caméras et/ou des faisceaux de balises pendant un processus de pré-inventaire et/ou un processus d'inventaire, dans lequel le FOV est réglé pour couvrir uniquement une ZOI et dans lequel un faisceau émis à partir d'une balise est réglé pour correspondre ou correspondre sensiblement au FOV de la caméra.

2. Procédé selon la revendication 1, comprenant en outre la détection, par le robot (130), du moment auquel un élément d'équipement d'affichage (102₁...102_{M}) a été relocalisé à l'intérieur de la zone, dans lequel l'au moins un premier marqueur est identifié par le robot (130) en réponse à la détection.

3. Procédé selon la revendication 1, comprenant en outre :
l'identification, par le robot (130), d'au moins un emplacement dans la zone au niveau de laquelle au moins un troisième marqueur doit être disposé ;
la réalisation d'opérations par le robot (130) pour disposer l'au moins un troisième marqueur au niveau de l'emplacement identifié ; et
la modification du mappage de données pour spécifier un emplacement physique actuel du troisième marqueur.

4. Procédé selon la revendication 3, comprenant en outre la détection, par le robot (130), d'un élément d'équipement d'affichage (102₁...102_{M}) qui a été ajouté à la zone, où l'au moins un premier marqueur ou l'au moins un emplacement est identifié en réponse à la détection.

5. Procédé selon la revendication 3, comprenant en outre la détermination, par le robot (130), qu'un marqueur supplémentaire doit être disposé à l'intérieur de la zone afin qu'un objectif actuel d'un système d'inventaire soit atteint pendant le processus d'inventaire ultérieur, où l'au moins un emplacement est identifié en réponse à la détermination.

6. Procédé selon la revendication 1, comprenant en outre :
la détermination, par le robot (130), d'un état de batterie d'un marqueur des premier et deuxième marqueurs ; et
le remplacement autonome, par le robot (130), du marqueur ou d'une batterie du marqueur lorsque l'état de batterie indique que le marqueur ou la batterie doit être remplacé.

7. Procédé selon la revendication 1, comprenant en outre la réalisation d'opérations par le robot (130) pour régler un faisceau émis à partir d'un marqueur des premier et deuxième marqueurs de sorte qu'une zone de couverture du marqueur correspond au FOV d'une caméra, dans lequel le processus d'inventaire ultérieur comprend en particulier l'utilisation d'informations obtenues à partir d'images capturées par au moins une caméra et d'informations obtenues à partir de la lecture d'au moins une étiquette d'identification par radiofréquence (« RFID ») (112₁...112_{M}).

8. Procédé selon la revendication 1, comprenant en outre la réalisation d'opérations par le robot (130) pour régler des niveaux de puissance des premier et deuxième marqueurs.

9. Robot (130), comprenant ;
un processeur ; et
un support de stockage lisible par ordinateur comprenant des instructions de programmation qui sont conçues pour amener le processeur à mettre en oeuvre un procédé de création d'un mappage de données à utiliser dans un processus d'inventaire ultérieur pour localiser des objets (110₁...100_{N}) à l'intérieur d'une zone, dans lequel les instructions de programmation comprennent des instructions pour :
identifier au moins un premier marqueur disposé à l'intérieur d'une zone qui doit être reprogrammé ;
transformer un premier état programmé de l'au moins un premier marqueur en un second état programmé ;
créer un mappage de données spécifiant un emplacement physique actuel de l'au moins un premier marqueur qui a été reprogrammé et des emplacements physiques actuels de deuxièmes marqueurs également disposés à l'intérieur de la zone ; et utiliser le mappage de données dans un processus d'inventaire ultérieur pour déterminer des emplacements d'objets (110₁...100_{N}) à l'intérieur de la zone ;
générer des données de référence à utiliser pendant un processus d'inventaire pour déterminer l'emplacement d'articles à l'intérieur d'une zone d'intérêt donnée, dans lequel les données de référence comprennent une carte ou un mappage des emplacements de marqueurs répartis dans toute la zone d'intérêt donnée ;
dans lequel la carte ou le mappage est généré par : (a) le placement autonome de marqueurs de divers types à l'intérieur de la zone d'intérêt donnée, (b) la configuration ou la reconfiguration autonome des marqueurs ; et (c) le stockage de premières informations indiquant les emplacements des marqueurs dans la zone d'intérêt donnée, dans lequel les premières informations sont utilisées pour générer une carte multidimensionnelle montrant les emplacements respectifs des marqueurs à l'intérieur de la zone d'intérêt donnée ;
dans lequel le processus d'inventaire est mis en oeuvre dans un système d'inventaire comprenant une installation de vente au détail, RSF ; dans lequel le robot (130) est conçu pour placer de manière autonome des caméras au niveau d'emplacements à l'intérieur de la RSF pendant un processus de pré-inventaire, dans lequel les caméras sont conçues pour capturer des images et/ou des vidéos de scènes à l'intérieur de leur champ de vision, FOV ;
le robot (130) est conçu pour localiser des balises au niveau d'emplacements à l'intérieur de la RSF, dans lequel les balises sont positionnées de sorte que des faisceaux sont émis vers des emplacements où des articles sont stockés, dans lequel la couverture d'une balise est la zone d'intérêt, ZOI, dans laquelle un récepteur de balise est capable de recevoir et de décoder des signaux de balise, dans lequel chaque ZOI contient les objets à inventorier et à localiser ;
dans lequel les caméras sont positionnées et/ou conçues de sorte qu'elles couvrent la même ZOI ou une ZOI semblable aux balises ;
dans lequel le robot (130) est conçu pour effectuer de manière autonome un réglage du FOV des caméras et/ou des faisceaux de balises pendant un processus de pré-inventaire et/ou un processus d'inventaire, dans lequel le FOV est réglé pour couvrir uniquement une ZOI et dans lequel un faisceau émis à partir d'une balise est réglé pour correspondre ou correspondre sensiblement au FOV de la caméra.

10. Robot selon la revendication 9, dans lequel les instructions de programmation comprennent en outre des instructions pour détecter le moment auquel un élément d'équipement d'affichage (102₁...102_{M}) a été relocalisé à l'intérieur de la zone, et dans lequel l'au moins un premier marqueur est identifié par le robot (130) en réponse à la détection.

11. Robot selon la revendication 9, dans lequel les instructions de programmation comprennent en outre des instructions pour :
identifier au moins un emplacement dans la zone au niveau de laquelle au moins un troisième marqueur doit être disposé ;
amener le robot (130) à effectuer des actions pour disposer l'au moins un troisième marqueur au niveau de l'emplacement identifié ; et
modifier le mappage de données pour spécifier un emplacement physique actuel du troisième marqueur.

12. Robot selon la revendication 11, dans lequel les instructions de programmation comprennent en outre des instructions pour détecter un élément d'équipement d'affichage (102₁...102_{M}) qui a récemment été ajouté à la zone, et dans lequel l'au moins un premier marqueur ou l'au moins un emplacement est identifié en réponse à la détection.

13. Procédé selon la revendication 11, dans lequel les instructions de programmation comprennent en outre des instructions pour déterminer qu'un marqueur supplémentaire doit être disposé à l'intérieur de la zone afin qu'un objectif actuel d'un système d'inventaire soit atteint pendant le processus d'inventaire ultérieur, où l'au moins un emplacement est identifié en réponse à la détermination.

14. Robot selon la revendication 9, dans lequel les instructions de programmation comprennent en outre des instructions pour amener le robot (130) à régler un faisceau émis à partir d'un marqueur des premier et deuxième marqueurs de sorte qu'une zone de couverture du marqueur correspond au FOV d'une caméra ; dans lequel un processus d'inventaire ultérieur comprend en particulier l'utilisation d'informations obtenues à partir d'images capturées par au moins une caméra et d'informations obtenues à partir de la lecture d'au moins une étiquette d'identification par radiofréquence (« RFID ») (112₁...112_{M}).

15. Robot selon la revendication 9, dans lequel les instructions de programmation comprennent en outre des instructions pour amener le robot (130) à régler des niveaux de puissance des premier et deuxième marqueurs.
